# EUROPEAN PATENT APPLICATION

(11) **EP 4 759 392 A1**
(43) Date of publication of application: **17.06.2026**
(21) Application number: 24851085.1
(22) Date of filing: 08.08.2024
(51) Int. Cl.: A63H 33/08, H02G 3/04

(54) **BUILDING BLOCK, BUILDING BLOCK ASSEMBLY, BUILDING BLOCK EXPANDER, AND TOY**

(30) Priority: 08.08.2023 CN 202322115831 U; 08.08.2023 CN 202310989932; 08.08.2023 CN 202322115807 U; 08.08.2023 CN 202322115868 U; 08.08.2023 CN 202322115843 U
(71) Applicant: Guangzhou Qiji Technology Co., Ltd., Guangzhou, Guangdong 510440 (CN)
(72) Inventor: HUANG, Xiaoxin, Guangzhou, Guangdong 510440 (CN); YUAN, Zhenxiang, Guangzhou, Guangdong 510440 (CN); LUO, Rixi, Guangzhou, Guangdong 510440 (CN); LUO, Xiaocui, Guangzhou, Guangdong 510440 (CN)
(74) Representative: Schulz Junghans Patentanwälte PartGmbB
(86) International application number: PCT/CN2024/110615
(87) International publication number: WO 2025/031440

(57) **Abstract**

Disclosed are a building block, a building block assembly, a building block expander, and a toy. The building block is provided with a wiring groove; and the wiring groove is exposed on the outer surface of the building block. The building block is further provided with a plurality of first protruding columns; each first protruding column is provided with a first wiring hole; the bottom of the building block is provided with a first splicing groove; and the first wiring hole is communicated with the first splicing groove. During assembly of building blocks, wiring grooves are formed in the building blocks, the wiring grooves are exposed on the outer surfaces of the building blocks, and wire harnesses can be placed in the wiring grooves of a plurality of assembled building blocks, thereby avoiding exposure of the wire harnesses from the plurality of building blocks or disordered placement of the wire harnesses on the building blocks, and preventing the wire harnesses from being damaged and broken due to being pressed by the building blocks.

## Description

### FIELD

The present disclosure relates to the technical field of disassemblable toys, and more particularly, to a building block, a building block assembly, a building block expander, and a toy.

### BACKGROUND

With the development of society, building blocks not only help to develop cognitive ability, but also hand-eye coordination ability of children, so building blocks have gradually become toys for many contemporary children. During assembly of the building blocks, in order to make the assembled building blocks more aesthetically appealing, wire harnesses and a series of linear luminous bodies such as fluorescent columns are often placed thereon.

### SUMMARY

The present disclosure provides a building block, a building block assembly, a building block expander, and a toy, to solve the problem of messy placement of a wire harness.

In a first aspect, the present disclosure provides a building block. The building block includes a wiring groove, and the wiring groove is exposed on the outer surface of the building block.

Optionally, the building block is provided with a plurality of first protruding columns, each first protruding column is provided with a first wiring hole, the bottom of the building block is provided with a first splicing groove, and the first wiring hole is communicated with the first splicing groove.

Optionally, the wiring groove includes a first wiring groove, the first wiring groove is provided with a wire harness entry slot and a wire harness exit slot, the wire harness entry slot and the wire harness exit slot are arranged at the bottom of the building block, the bottom of the building block is provided with at least two first recessed portions, one of the first recessed portions is correspondingly arranged at the wire harness entry slot of the first wiring groove, the other first recessed portion is correspondingly arranged at the wire harness exit slot of the first wiring groove, and the first recessed portion is configured to allow the first wiring groove to communicate with the first splicing groove.

Optionally, the first wiring groove includes a first groove body, a second groove body, and a third groove body which are communicated in sequence, the first groove body is located on one outer side wall of the building block, the second groove body is located on the upper end face of the building block, the third groove body is located on another outer side wall of the building block, and the third groove body and the first groove body are arranged opposite to each other.

Optionally, the building block is provided with a plurality of first wiring grooves, and a second groove body of the first wiring groove is correspondingly arranged between two adjacent first protruding columns.

Optionally, the building block includes a building block main body and a building block cover body, the building block cover body is assembled on the building block main body, the building block main body is provided with a first accommodating groove, the first accommodating groove is configured to accommodate a wire harness of a lamp body, a front wall of the building block main body is provided with a plurality of first wiring ports extending therethrough, a rear wall of the building block main body is provided with a second wiring ports extending therethrough, and a left wall and a right wall of the building block main body are provided with third wiring ports extending therethrough.

Optionally, the wiring groove includes a second wiring groove and a third wiring groove, the first wiring port and the second wiring port are both communicated with the second wiring groove, and the third wiring port is communicated with the third wiring groove.

Optionally, the bottom of the building block is provided with a second splicing groove, and the building block is assembled with a block or another building block through the second splicing groove.

Optionally, the building block main body is provided with a slot portion, the building block cover body covers the slot portion of the building block main body, the building block cover body is provided with a second protruding column, and the second protruding column is matched with the second splicing groove of the building block main body.

Optionally, the bottom of the building block main body is provided with a third protruding column, the length of the third protruding column is less than or equal to the depth of the second splicing groove, and the bottom of the third protruding column is provided with a plurality of first wire embedding spaces.

Optionally, the wiring groove includes a fourth wiring groove, the fourth wiring groove is arranged on the building block cover body, and the fourth wiring groove is exposed on the outer surface of the building block cover body. The fourth wiring groove includes a first groove body, a second groove body, and a third groove body which are communicated in sequence, the first groove body is positioned on one outer side wall of the building block cover body, the second groove body is positioned on the upper end face of the building block cover body, the third groove body is positioned on another outer side wall of the building block cover body, and the third groove body and the first groove body are arranged opposite to each other.

Optionally, the wiring groove includes a fifth wiring groove, and the left side wall and the right side wall of the building block cover body are provided with fifth wiring grooves.

Optionally, the first protruding column is provided with two fourth wiring ports, and the two fourth wiring ports are oppositely arranged on the first protruding column.

The upper surface of the building block is provided with a second wire embedding groove having the same length as the building block, the second wire embedding groove penetrates through the first protruding column, and the two fourth wiring ports are communicated with the second wire embedding groove.

Optionally, the wiring groove includes a sixth wiring groove, the side wall of the building block is provided with the sixth wiring groove, and the sixth wiring groove is communicated with the second wire embedding groove.

In a second aspect, the present disclosure provides a building block assembly, which includes the building block according to the first aspect.

Optionally, the building block assembly includes a wire harness deflection block, and the wire harness deflection block is connected to the building block;
the wire harness deflection block is provided with a second wiring hole, and when the wire harness deflection block and the building block are assembled, the second wiring hole is communicated with the first wiring hole, to allow the wire harness to pass through the second wiring hole and the first wiring hole;
the side wall of the second wiring hole is provided with a wire harness deflection notch, and the wire harness can turn from the axial direction of the second wiring hole to the radial direction of the second wiring hole to pass through the wire harness deflection notch to achieve deflection of the wire harness; and
the wire harness deflection block can rotate relative to the building block, to achieve angular deflection of the wire harness within a range of 0° to 360°.

Optionally, the building block assembly further includes a building block adapter block, the building block adapter block is provided with a third splicing groove, and the wire harness deflection block is connected to the building block through the building block adapter block, a limiting boss is arranged in the third splicing groove of the building block adapter block, and the limiting boss is provided with an arc portion.

Optionally, the building block assembly includes a wire harness accommodating block, the building block is assembled onto the wire harness accommodating block, the wire harness accommodating block is provided with a second accommodating groove, the second accommodating groove is configured to accommodate a wire harness of a lamp body, the side wall of the wire harness accommodating block is provided with a fifth wiring port, the fifth wiring port is communicated with the second accommodating groove, and the bottom of the wire harness accommodating block is provided with a sixth splicing groove.

In a third aspect, the present disclosure provides a building block expander, which includes the building block according to the first aspect, and further includes a first circuit board. The first circuit board is arranged in the accommodating groove of the building block main body; a plurality of first female connectors are connected to the first circuit board, the first female connector is exposed on the building block through the first wiring port or the third wiring port, and the first female connector is configured to connect the lamp body.

In a fourth aspect, the present disclosure provides a toy. The toy includes the building block according to the first aspect, or the building block assembly according to the second aspect, or the building block expander according to the third aspect.

The toy further includes a lamp body, and one end of a wire harness of the lamp body is connected to a power supply.

Compared with the prior art, the present disclosure has the following beneficial effects. The building block includes a wiring groove exposed on an outer surface of the building block. Therefore, during assembly of building blocks, wire harnesses can be placed in the wiring grooves of the assembled building blocks, thereby avoiding exposure of the wire harnesses outside a plurality of building blocks or disordered placement on the building blocks, and preventing the wire harnesses from being damaged and broken due to being pressed by the building blocks.

### BRIEF DESCRIPTION OF THE DRAWINGS

The specific implementations of the present disclosure are further described in detail below with reference to the drawings.
FIG. 1 is a perspective view of a building block according to a first aspect;
FIG. 2 is a bottom view of the building block according to the first aspect;
FIG. 3 is a perspective view of building blocks with different heights according to the first aspect;
FIG. 4 is a perspective view of a building block cover plate according to the first aspect;
FIG. 5 is a schematic diagram of assembling the building block and the building block cover plate according to the first aspect;
FIG. 6 is a perspective view of a building block adapter block according to the first aspect;
FIG. 7 is a top view of the building block adapter block according to the first aspect;
FIG. 8 is a perspective view of a wire harness deflection block according to the first aspect;
FIG. 9 is a perspective view of the wire harness deflection block with a wire harness portion according to the first aspect;
FIG. 10 is a schematic diagram of wiring in the building block adapter block and the wire harness deflection block according to the first aspect;
FIG. 11 is a schematic diagram of wiring in a building block assembly according to the first aspect;
FIG. 12 is a schematic diagram of assembling building blocks according to the second aspect;
FIG. 13 is a bottom view of a building block according to the second aspect;
FIG. 14 is a perspective view of a plurality of building blocks assembled together according to the second aspect;
FIG. 15 is a schematic diagram of assembly of an expander according to the second aspect;
FIG. 16 is a schematic diagram of usage of an expander with a second female connector according to the second aspect;
FIG. 17 is a schematic diagram of usage of an expander with a TEPY-C interface according to the second aspect;
FIG. 18 is a schematic diagram of a toy according to the second aspect;
FIG. 19 is a perspective view of a building block with a plurality of units according to a third aspect;
FIG. 20 is a top view of the building block with the plurality of units according to the third aspect;
FIG. 21 is a bottom view of the building block with the plurality of units according to the third aspect;
FIG. 22 is a perspective view of a building block with a unit according to the third aspect;
FIG. 23 is a schematic diagram of assembling the building with the plurality of units according to the third aspect;
FIG. 24 is a perspective view of a wire harness accommodating block matched with the building block with the plurality of units according to the third aspect;
FIG. 25 is a top view of the wire harness accommodating block matched with the building block with a plurality of units according to the third aspect;
FIG. 26 is a bottom view of the wire harness accommodating block matched with the building block with a plurality of units according to the third aspect;
FIG. 27 is a perspective view of the wire harness accommodating block matched with the building block with a unit according to the third aspect;
FIG. 28 is a schematic diagram of assembling the building block with a plurality of unit and a wire harness accommodating block according to the third aspect;
FIG. 29 is a schematic diagram of assembling the building block with a unit and a wire harness accommodating block according to the third aspect;
FIG. 30 is a schematic diagram of a toy according to a third aspect;
FIG. 31 is a perspective view of a harness deflection block according to a fourth aspect;
FIG. 32 is a perspective view of a wire harness deflection block with a wire bundling portion according to the fourth aspect;
FIG. 33 is a perspective view of an adapter block according to the fourth aspect;
FIG. 34 is a top view of the adapter block according to the fourth aspect;
FIG. 35 is a perspective view of a building block according to the fourth aspect;
FIG. 36 is a bottom view of the building block according to the fourth aspect;
FIG. 37 is a perspective view of building blocks with different heights according to the fourth aspect;
FIG. 38 is a perspective view of a building block cover plate according to the fourth aspect;
FIG. 39 is a diagram of assembling the building block and the building block cover plate according to the fourth aspect;
FIG. 40 is a schematic diagram of wiring in the wire harness deflection block and the building block cover plate according to the fourth aspect;
FIG. 41 is a schematic diagram of wiring in a building block assembly according to the fourth aspect;
FIG. 42 is a schematic diagram of assembling an expander according to the fifth aspect;
FIG. 43 is a schematic diagram of assembling the expander according to the fifth aspect;
FIG. 44 is a perspective view of the expander according to the fifth aspect;
FIG. 45 is a schematic diagram of usage of the expander according to the fifth aspect;
FIG. 46 is a schematic diagram of assembling a TEPY-C expander according to the fifth aspect; and
FIG. 47 is a schematic diagram of usage of an expander assembly according to the fifth aspect.

In the figures: 100: building block; 110: first protruding column; 111: first wiring hole; 112: wiring hole; 113: lamp shade; 120: first splicing groove; 121: guide portion; 130: first wiring groove; 131: wire harness entry slot; 132: wire harness exit slot; 133: first groove body; 134: second groove body; 135: third groove body; 140: first recessed portion; 150: building block cover plate; 151: fourth splicing groove; 152: seventh wiring groove; 210: building block main body; 211: first wiring port; 212: second wiring port; 213: third wiring port; 214: first accommodating groove; 215: second wiring groove; 216: third wiring groove; 217: second splicing groove; 218: third protruding column; 219: first wire embedding space; 220: building block cover body; 221: fourth wiring groove; 224: fifth wiring groove; 225: second protruding column; 230: slot portion; 300: building block; 310: fourth wiring port; 320: second wire embedding groove; 330: sixth wiring groove; 340: fifth splicing groove; 350: fourth protruding column; 400: wire harness deflection block; 410: second wiring hole; 411: wire harness deflection notch; 412: wire bundling portion; 413: eighth wiring groove; 420: wire harness deflection block body; 421: first wire harness deflection notch; 422: second harness deflection notch; 430: disk portion; 431: tenth wiring groove; 500: building block adapter block; 510: third splicing groove; 511: limiting boss; 511': limiting plate; 512': arc portion; 600: wire harness accommodating block; 610: second accommodating groove; 620: fifth wiring port; 630: sixth splicing groove; 640: ninth wiring groove; 650: fifth protruding column; 700: expander; 710: first circuit board; 720: first female connector; 730: second female connector; 740: TEPY-C interface; 750: first male connector; 760: expander housing; 761: seventh groove body; 762: eleventh wiring groove; 763: sixth protruding column; 770: second circuit board; 780: third circuit board; 781: TEPY-C interface; 790: first cover plate; 800: wire harness; 900: lamp body; 910: transparent lamp shade; 920: TEPY-C expander housing; 921: eighth groove body; 940: second cover plate; 950: third female connector; 960: second male connector; 970: third male connector; and 980: power switch.

### DETAILED DESCRIPTION

The preferred embodiments of the present disclosure are described below with reference to the drawings. It should be understood that the preferred embodiments described herein are only for illustrating and explaining the present disclosure, and are not for limiting the present disclosure. The location words such as "upper" and "lower" referred to herein are defined relative to the viewing angles in the drawings, are merely for convenience of description, and cannot be understood as limitations to the technical solutions. In addition, terms such as "first", "second" and the like are only for distinguishing the names and do not indicate specific quantities or sequences.

In the prior art, most of wire harnesses of the building blocks are directly exposed or disorderly placed on the building blocks, causing a sense of disobedience between the wire harnesses and the building block product. In addition, the wire harnesses may also be damaged and broken due to being pressed by the building blocks.

Accordingly, the present disclosure provides a building block. The building block is provided with a wiring groove, and the wiring groove is exposed on the outer surface of the building block.

Specifically, in a first aspect, the building block 100 provided by the present disclosure is provided with the first wiring groove 130. The first wiring groove 130 is exposed on the outer surface of the building block 100, the first wiring groove 130 is provided with a wire harness entry slot 131 and a wire harness exit slot 132, the wire harness entry slot 131 and the wire harness exit slot 132 are arranged at the bottom of the building block 100, a wire harness 800 is inserted into the building block 100 through the wire harness entry slot 131, and the wire harness 800 is routed in an orientation of the first wiring groove 130, such that the wire harness can be routed in a horizontal direction of the building block 100; the building block 100 is provided with a plurality of first protruding columns 110, each first protruding column 110 is provided with a first wiring hole 111, the bottom of the building block 100 is provided with a first splicing groove 120, and the first wiring hole 111 is communicated with the first splicing groove 120; and the wire harness 800 passes through the wire harness exit slot 132 and the first splicing groove 120 in sequence to enter the first wiring hole 111, and the wire harness 800 is routed in an axial direction of the first wiring hole 111. During assembly of building blocks, the wire harness can freely extend inside and outside the building blocks, thereby avoiding exposure of the wire harness or disordered placement of the wire harness on the building blocks, and preventing the wire harness from being damaged and broken due to being pressed by the building blocks.

Specifically, the first wiring groove 130 includes a first groove body 133, a second groove body 134, and a third groove body 135 which are communicated in sequence, the first groove body 133 is positioned on one outer side wall of the building block 100, the second groove body 134 is positioned on the upper surface of the building block 100, and the third groove body 135 is positioned on another outer side wall of the building block 100. The third groove body 135 and the first groove body 133 are arranged opposite to each other. The wire harness 800 can be routed in orientations of the first groove body 133, the second groove body 134, and the third groove body 135. The bottom of the building block 100 is provided with at least two first recessed portions 140; one of the first recessed portions 140 is correspondingly arranged at the wire harness entry slot 131 of the first wiring groove 130, and the other first recessed portion 140 is correspondingly arranged at the wire harness exit slot 132 of the first wiring groove 130; and the wire harness entry slot 131 is communicated with the first groove body 133 and the first splicing groove 120 through the first recessed portion 140, and the wire harness exit slot 132 is communicated with the third groove body 135 and the first splicing groove 120 through the first recessed portion 140, such that the first wiring groove 130 is communicated with the first splicing groove 120. When two building blocks 100 are spliced together, the wire harness entry slot 131, the first splicing groove 120, and the wire harness exit slot 132 form a groove body with the second groove body 134, and an internal space of the groove body can accommodate a plurality of wire harnesses 800 without affecting the stability of the building blocks. Under matching of first wiring holes 111 of the plurality of first protruding columns 110, the plurality of wire harnesses 800 in the groove body can be routed to different orientations, and the wire harnesses 800 from different orientations can also be gathered in the groove body, thereby preventing the wire harnesses from being damaged and broken due to being pressed by the building blocks, and allowing the wire harnesses to be more attractive on the building blocks.

In a specific embodiment, the groove width of the first groove body 133 is greater than the groove width of the second groove body 134, the groove width of the third groove body 135 is greater than the groove width of the second groove body 134, and two ends of the second groove body 134 are respectively provided with chamfered structures to enable the two ends of the second groove body 134 to have flared structures that open outwardly. The flared shape refers to cutting off a right-angle end of the second groove body 134, and after the wire harness 800 is pressed up and down, when the length of the wire harness is required to be adjusted and the wire harness 800 is pulled at a certain segment, the wire harness 800 moves within the flared portion at a gentler angle than a right-angle side. This reduces stress concentration caused by the right-angle side when the wire harness is moved, thereby reducing the risk of scratching or peeling of a paint coating and effectively lowering the likelihood of damage of the wire harness. The inner wall of the first splicing groove 120 is provided with a plurality of guide portions 121, the guide portions 121 protrude outward from the surface of the inner wall of the first splicing groove 120, the guide portion 121 is a V-shaped structure, and two guide portions 121 are correspondingly arranged on two sides of the first recessed portion 140. Because the provision of the first splicing groove 120 at the bottom disrupts the structure for engaging with a stud at the bottom in the existing building block design, this V-shaped structure is provided to increase a contact area to ensure tight engaging of the building blocks, and when the wire harness 800 enters the first wiring hole 111 from the wire harness exit slot 132, the guide portions 121 better guide the wire harness 800 to pass through the first wiring hole 111, without damage due to being pressed.

In a specific embodiment, the building block 100 is provided with a plurality of first wiring grooves 130, and a second groove body 134 of each first wiring groove 130 is correspondingly arranged between two adjacent first protruding columns 110. Specifically, the second groove body 134 is vertically arranged between every two first protruding columns 110, and under the action of the plurality of first wiring grooves 130, the wire harness is more conveniently routed in the horizontal direction of the building block 100.

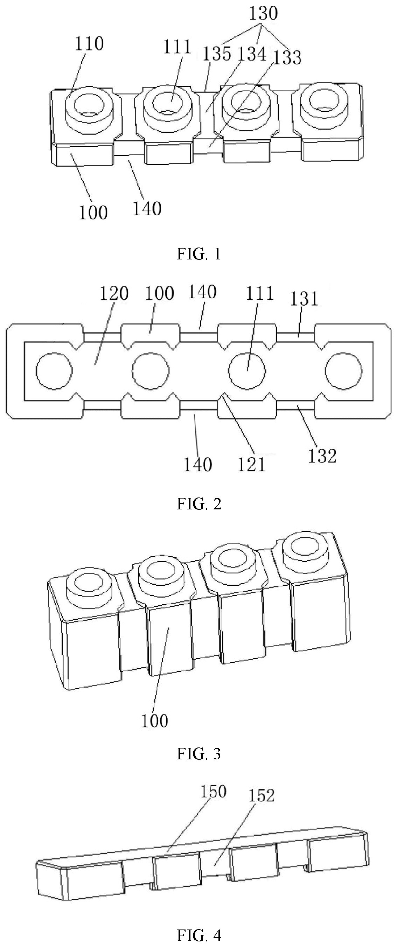

As shown in FIG. 1, FIG. 2, FIG. 3, FIG. 6, FIG. 8, and FIG. 11, the present disclosure further provides a building block assembly. The building block assembly includes a building block 100, a building block adapter block 500, and a wire harness deflection block 400. During use, a plurality of building blocks 100, building block adapter blocks 500, and wire harness deflection blocks 400 are arranged. The building block 100 is provided with a first splicing groove 120 and a first protruding column 110, the first splicing groove 120 is matched with the first protruding column 110, and the first splicing groove 120 is configured to be engaged with a commercially available building block or another building block 100, to ensure the stability of the building block 100 and the commercially available building block or the stability of the building block 100 and the building block 100. The first protruding column 110 is provided with a first wiring hole 111; during assembly of the building blocks, the wire harness 800 passes through the first wiring hole 111, and the wire harness deflection block 400 is connected to the building block 100. Specifically, the wire harness deflection block 400 can be directly sleeved on the first wiring hole 111 of the first protruding column 110, a disk portion of the wire harness deflection block 400 is configured to prevent the entire wire harness deflection block 400 from retracting in the first wiring hole 111 of the first protruding column 110 when the assembled building blocks are excessively heavy. Alternatively, the wire harness deflection block 400 is spliced with the building block 100 through the building block adapter block 500. More specifically, the top and the bottom of the building block adapter block 500 are respectively provided with third splicing grooves 510, the two third splicing grooves 510 are communicated with each other, the wire harness 800 passes through the third splicing groove 510, and the third splicing groove 510 is spliced with the first protruding column 110, to ensure the stability of the building block adapter block 500 and the building block 100; the wire harness deflection block 400 is spliced with the third splicing groove 510, the wire harness deflection block 400 is provided with a second wiring hole 410, and the wire harness 800 passes through the second wiring hole 410; when the wire harness deflection block 400 and the building block 100 are spliced, the second wiring hole 410 and the first wiring hole 111 are communicated, and the wire harness 800 conveniently passes through the second wiring hole 410 and the first wiring hole 111; and the side wall of the second wiring hole 410 is provided with wire harness deflection notches 421 and 422, the wire harness 800 exits from the wire harness deflection notches 421 and 422, and the wire harness 800 can turn from the axial direction of the second wiring hole 410 to the radial direction of the second wiring hole 410 and pass through the wire harness deflection notches 421 and 422 to achieve deflection of the wire harness 800. The wire harness deflection notches 421 and 422 may be formed at any positions on the side wall of the wire harness deflection block 400, which contributes to adjustment of an exit direction of the wire harness 800; the wire harness deflection block 400 can rotate relative to the building block 100, and the shape of the wire harness deflection block 400 is preferably a cylinder. This is beneficial to the rotation of the wire harness deflection block 400, a rotation angle can be adjusted according to the exit direction of the wire harness 800, and the rotation angle may be any angle, to achieve angular deflection of the wire harness within a range of 0° to 360°. Therefore, during assembly of the building blocks, the wire harness 800 can be freely routed in all directions inside the building blocks, thereby avoiding exposure of the wire harness or disordered placement of the wire harness on the building blocks, and preventing the wire harness 800 from being damaged and broken due to being pressed by the building blocks.

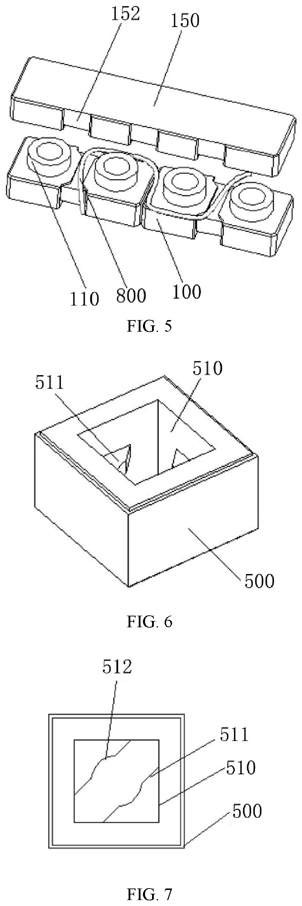

In a specific embodiment, as shown in FIG. 6 and FIG. 7, a limiting boss 511 is arranged in the third splicing groove 510. Specifically, a number of limiting bosses 511 is two, the two limiting bosses 511 are oppositely arranged in the third splicing groove 510, thereby forming a channel, the channel is configured to allow the wire harness 800 and a lamp body to pass through, the limiting boss 511 is provided with an arc portion 512, the limiting bosses 511 form a bayonet with arcs in the third splicing groove 510, the bayonet may be configured to clamp the first protruding column 110 of the building block 100 or the wire harness deflection block 400, the third splicing groove 510 is configured to clamp the first protruding column 110 of the building block 100 or the wire harness deflection block 400, and the wire harness deflection block 400 can rotate in the third splicing groove 510 and further ensure the stability of the wire harness deflection block 400 and the building block adapter block 500 or the stability of the building block adapter block 500 and the building block 100.

In addition, the present disclosure further provides another embodiment. The wire harness deflection block 400 is fixedly connected or integrally formed with one of the third splicing grooves 510 of the building block adapter block 500, the building block adapter block 500 is still spliced with the building block 100, the wire harness 800 directly enters the second wiring hole 410 of the wire harness deflection block 400 from the third splicing groove 510, the wire harness 800 exits from the wire harness deflection notches 421 and 422, and a function of changing a wire harness routing direction can also be achieved. The wire harness deflection notches 421 and 422 may be formed at any positions of the wire harness deflection block 400, which contributes to adjustment of an exit direction of the wire harness 800, such that during assembly of the building blocks, the wire harness 800 can be freely routed in all directions inside the building blocks, thereby avoiding exposure of the wire harness or disordered placement of the wire harness on the building blocks, and preventing the wire harness 800 from being damaged and broken due to being pressed by the building blocks.

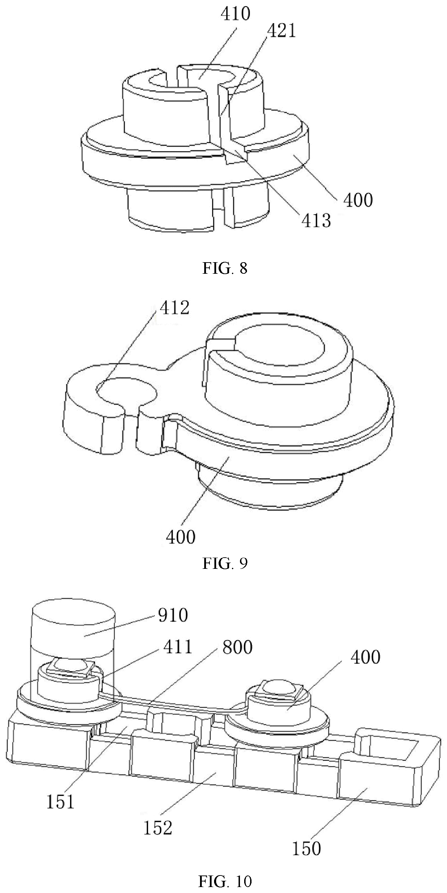

In a specific embodiment, as shown in FIG. 8 and FIG. 9, the upper surface of the disk portion of the wire harness deflection block 400 is provided with an eighth wiring groove 413, and the eighth wiring groove 413 is configured to accommodate the wire harness 800. When the wire harness 800 is led out from the wire harness deflection notches 421 and 422, the wire harness 800 passes through the eighth wiring groove 413, to further avoid exposure of the wire harness or disordered placement of the wire harness on the building blocks, and prevent the wire harness 800 from being damaged and broken due to being pressed by the building blocks. The wire harness deflection block 400 is also provided with a wire bundling portion 412, and a plurality of wire harnesses are bundled together through the wire bundling portion 412, thereby also avoiding disordered placement of the wire harness 800 on the building blocks.

In a specific embodiment, as shown in FIG. 4, FIG. 5, and FIG. 10, the building block assembly further includes a building block cover plate 150, the building block cover plate 150 is provided with a fourth splicing groove 151, the side wall of the building block cover plate 150 is provided with a seventh wiring groove 152, and the fourth wiring groove 151 is spliced with the first protruding column 110. When a lamp body needs to be placed on an assembled building block model, the building block cover plate 150 is used at the last step before completing the assembly of the building block model, and is spliced through the fourth splicing groove 151, to ensure the stability of the building block cover plate 150 on the building block model; and the wire harness 800 passes through the seventh wiring groove 152, to avoid direct exposure on the building blocks, and the lamp body is placed on the upper surface of the wire harness deflection block.

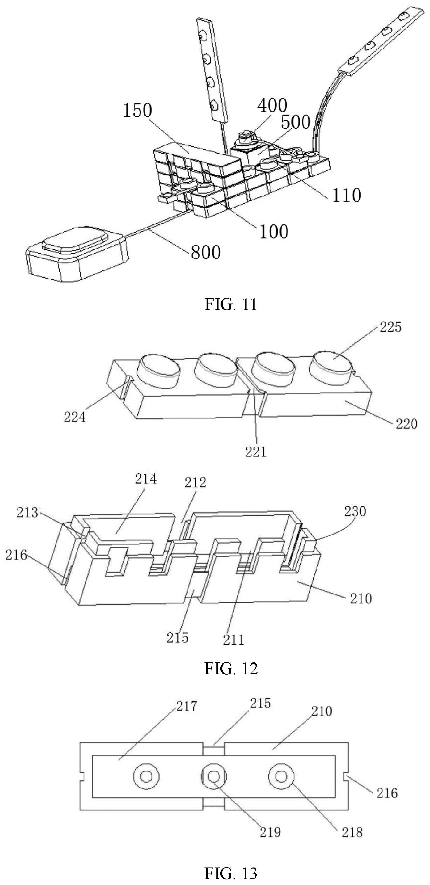

In addition, as shown in FIG. 11, the building block cover plate 150 may also be directly used in conjunction with the wire harness deflection block 400. Specifically, the wire harness deflection block 400 is spliced with the fourth splicing groove 151 of the building block cover plate 150, and side walls of upper and lower ends of the wire harness deflection block 400 are provided with wire harness deflection notches 421 and 422, and the wire harness 800 enters the fourth splicing groove 151 through the seventh wiring groove 152 to avoid direct exposure on the building blocks. The wire harness 800 enters the second wiring hole 410 through the wire harness deflection notches 421 and 422 at the lower end of the wire harness deflection block 400, and exits from the wire harness deflection notches 421 and 422 at the upper end of the wire harness deflection block 400, such that the wire harness 800 is led out. The wire harness 800 at this moment may act on another wire harness deflection block 400 spliced on the building block cover plate 150, such that the wire harness 800 can run along the building block cover plate 150.

In a specific embodiment, as shown in FIG. 10, the wire harness deflection block 400 is sleeved with a transparent lamp shade 910, and under the action of the transparent lamp shade 910, a lighting effect of a building block model can be made more realistic, thereby making the building block model as a whole more attractive. In addition, as shown in FIG. 1 and FIG. 3, the present disclosure further provides building blocks 100 with different heights, a building block adapter block 500, a wire harness deflection block 400, and a building block cover plate 150.

The present disclosure further provides a toy. The toy includes a building block or a building block assembly, and further includes a wire harness 800. One end of the wire harness 800 is connected to a power supply, the power supply is preferably a battery box, and the other end is connected to a lamp body. The wire harness 800 is arranged in the building blocks 100, the building block adapter block 500, the wire harness deflection block 400, and the building block cover plate 150, and steps of arranging the wire harness 800 are as follows:
S101: A plurality of building blocks 100 are spliced together in a transverse direction, and a plurality of wire harnesses 800 are routed in an orientation of a first wiring groove 130.
S102: When a certain wire harness 800 needs to change a routing direction, the building block adapter block 500 is spliced on the building block 100, the wire harness deflection block 400 is spliced on the building block adapter block 500, and the wire harness passes through a first wiring hole 111 of the building block 100, a third splicing groove 510 of the building block adapter block 500, and a second wiring hole 410 formed in the wire harness deflection block 400 in sequence, such that the wire harness 800 can be routed in axial directions of the first wiring hole 111 and the second wiring hole 410. At this moment, the lamp body can be directly clamped on the top of the wire harness deflection block 400, and if the height of a building block model is required to continuously increase, building blocks matched with the wire harness deflection block 400 may also be spliced.
S103: The wire harness exits from wire harness deflection notches 421 and 422, and the wire harness deflection block 400 can be rotated according to an exit direction of the wire harness 800, and is connected to another wire harness deflection block 400 on the building block, such that the wire harness 800 can be freely routed in all direction inside the building blocks.

In a second aspect, the present disclosure provides a building block, as shown in FIG. 12 to FIG. 18, the building block includes a building block main body 210 and a building block cover body 220. The bottom of the building block main body 210 is provided with a second splicing groove 217, through the second splicing groove 217, the building block can be spliced with a commercially available building block or another building block in the present disclosure, the building block main body 210 is provided with a first accommodating groove 214, the first accommodating groove 214 can accommodate a wire harness of a lamp body, a front wall of the building block main body 210 is provided with a plurality of first wiring ports 211 extending therethrough, a rear wall of the building block main body 210 is provided with a second wiring port 212 extending therethrough, and the wire harness of the lamp body can enter the first accommodating groove 214 from the first wiring port 211, and exit from the second wiring port 212. The wire harness may also enter the first accommodating groove 214 from the second wiring port 212, and exits from the first wiring port 211. In addition, a left wall and a right wall of the building block main body 210 are provided with third wiring ports 213 extending therethrough, and the wire harness of the lamp body can enter the first accommodating groove 214 from the third wiring port 213 in the left wall, and exit from the first wiring port 211 or the second wiring port 212 or the third wiring port 213 in the right wall. The building block cover body 220 is assembled on the building block main body 210. Specifically, the building block main body 210 is provided with a slot portion 230, the building block cover body 220 covers the slot portion 230 of a certain building block main body 210, the building block cover body 220 is provided with a second protruding column 225, and the second protruding column 225 is matched with a second splicing groove 217 of another building block main body 210, to achieve a splicing function of the building blocks. During assembly of the building blocks, the wire harness can be routed inside the building blocks, thereby avoiding exposure of the wire harness or disordered placement of the wire harness on the building blocks, and preventing the wire harness from being damaged and broken due to being pressed by the building blocks.

In a specific embodiment, the bottom of the building block main body 210 is provided with a third protruding column 218, and the length of the third protruding column 218 is less than or equal to the depth of the second splicing groove 217. Specifically, the size of the third protruding column 218 is different from that of the second protruding column 225, such that the building block can be better matched with the commercially available building block; the first wiring port 211 and the second wiring port 212 are communicated with a second wiring groove 215; when the wire harness of the lamp body enters or exits the first wiring port 211 or the second wiring port 212, the second wiring groove 215 is configured to bury the wire harness of the lamp body to avoid exposure of the wire harness on the outer surface of the building block; a third wiring port 213 is communicated with a third wiring groove 216; and when the wire harness of the lamp body enters or exits the third wiring port 213, the third wiring groove 216 is also configured to bury the wire harness of the lamp body to avoid exposure of the wire harness on the outer surface of the building block. The bottom of the third protruding column 218 is provided with a plurality of first wire embedding spaces 219, and when the wire harness of the lamp body is routed to the second splicing groove 217 of the building block, the wire harness passes through the first wire embedding spaces 219 of the third protruding column 218, and under the action of the first wire embedding spaces 219, the wire harness is not exposed at the bottom of the third protruding column 218 and does not affect the assembly of the building blocks, thereby ensuring the firmness between the building blocks during assembly of the building blocks.

In a specific embodiment, the building block cover body 220 is provided with a fourth wiring groove 221, the fourth wiring groove 221 is exposed on the outer surface of the building block cover body 220, and the fourth wiring groove 221 is also configured to bury the wire harness of the lamp body to avoid exposure of the wire harness on the outer surface of the building block cover body 220. The fourth wiring groove 221 includes a fourth groove body, a fifth groove body, and a sixth groove body which are communicated in sequence, the fourth groove body is positioned on one outer side wall of the building block cover body 220, the fifth groove body is positioned on the upper end face of the building block cover body 220, the sixth groove body is positioned on another outer side wall of the building block cover body 220, the sixth groove body and the fourth groove body are arranged opposite to each other, and the wire harness can be routed in an orientation of the fourth groove body, the fifth groove body, and the sixth groove body. The groove width of the fourth groove body is greater than the groove width of the fifth groove body, the slot groove of the sixth groove body is greater than the groove width of the fifth groove body, and two ends of the fifth groove body are provided with chamfered structures to enable the two ends of the fifth groove body to have flared structures that open outwardly. The flared shape refers to cutting off a right-angle end of the second groove body 134, and after the wire harness 800 is pressed up and down, when the length of the wire harness is required to be adjusted and the wire harness 800 is pulled at a certain segment, the wire harness 800 moves within the flared portion at a gentler angle than a right-angle side. This reduces stress concentration caused by the right-angle side when the wire harness is moved, thereby reducing the risk of scratching or peeling of a paint coating and effectively lowering the likelihood of damage of the wire harness. The left side wall and the right side wall of the building block cover body 220 are provided with fifth wiring grooves 224, and the fifth wiring grooves 224 are also configured to bury the wire harness of the lamp body, to avoid exposure of the wire harness on the outer surface of the building block cover body 220.

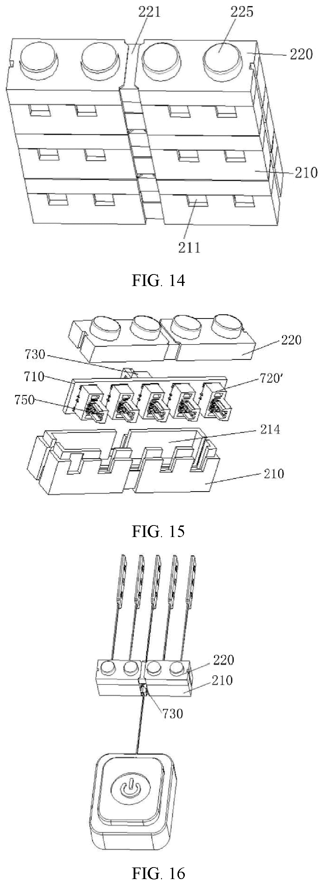

As shown in FIG. 15 to FIG. 18, the present disclosure further provides a building block expander. The building block expander includes a building block, and further includes a first circuit board 710. The first circuit board 710 is arranged in the first accommodating groove 214 of the building block main body 210, the first circuit board 710 is connected with a second female connector 730 or a TEPY-C interface 740, the second female connector 730 or the TEPY-C interface 740 is exposed on the building block through the second wiring port 212, the second female connector 730 or the TEPY-C interface 740 is configured to connect a power supply, the power supply is preferably a battery box, a wire harness of the battery box is connected to the second female connector 730 of the expander in a soldering manner, or the battery box is connected to the TEPY-C interface 740 through a TEPY-C data cable. The first circuit board 710 is connected with a plurality of first female connectors 720'. Preferably, a number of first female connectors 720' is a sum of a number of first wiring ports 211 and a number of third wiring ports 213 of the building block, the first female connectors 720' are exposed on the building block through the first wiring ports 211 or the third wiring ports 213, and the first female connectors 720' are configured to connect the lamp body. More specifically, the wire harness of the lamp body is connected with the first female connectors 720' in a soldering manner, and under combined action of the battery box and the first circuit board 710, the plurality of first female connectors 720' are powered on, one battery box can provide power for a plurality of lamp bodies. The expander is not only suitable for the building block, but also does not affect the overall structural stability of the building block. In addition, a problem that each lamp body needs to be equipped with a battery box is avoided, and a number of battery boxes used at the same time during assembly of the building blocks is reduced.

In a specific embodiment, the first female connector 720' and the second female connector 730 are provided with mating ports, the mating port is provided with a guide structure and a metal conductive plate, and the metal conductive plate is configured to conduct current. First male connectors 750 are inserted into the mating ports of the first female connector 720' and the second female connector 730, the first male connector 750 is provided with a mating plug, and the mating plug is provided with a limiting structure matched with the guide structure. One end of the mating plug is electrically inserted into the mating port and is in contact with the metal conductive plate, and the other end of the mating plug is connected to the wire harness of the lamp body. Under interaction of the guide structure and the limiting structure, the first male connector 750 is conveniently inserted into the first female connector 720' or the second female connector 730, and the stability of the electrical connection therebetween is ensured; and during long-term use, the first male connector 750 is not easily detached from the first female connector 720' or the second female connector 730.

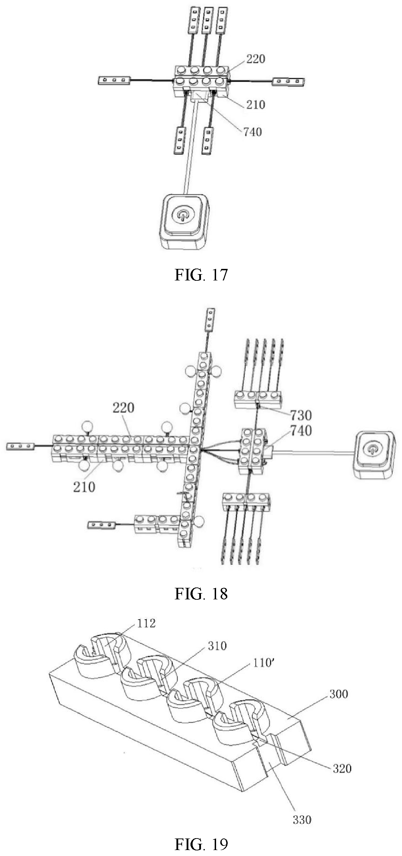

As shown in FIG. 18, the present disclosure further provides a toy. The toy includes a building block, and a building block expander, and further includes a lamp body. One end of a wire harness of the lamp body is connected to the expander, and the expander is the expander introduced in the present disclosure, thereby avoiding a problem that each lamp body needs to be equipped with a battery box, and reducing a number of battery boxes used at the same time during assembly of building blocks. The wire harness of the lamp body is placed inside the building block, and the building block is the building block introduced in the present disclosure, thereby avoiding exposure of the wire harness or disordered placement of the wire harness on the building block, and preventing the wire harness from being damaged and broken due to being pressed by the building block.

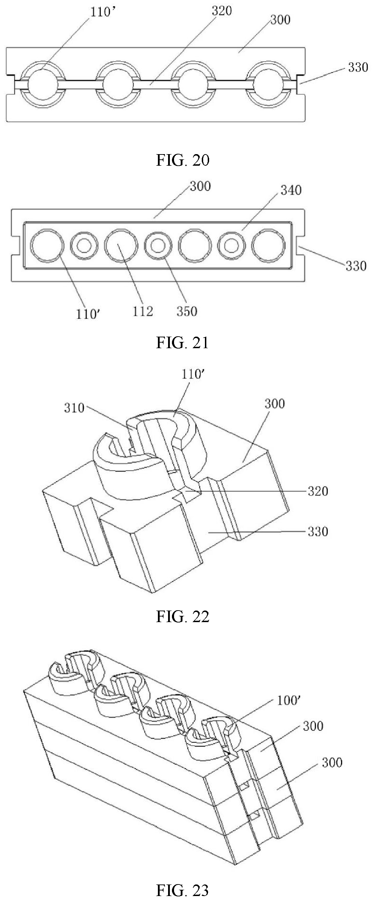

In a third aspect, the present disclosure provides a building block, as shown in FIG. 19, FIG. 20, FIG. 21, FIG. 22, FIG. 23, FIG. 28, FIG. 29, and FIG. 30. The building block may be a building block 300 formed by one unit, the building block may also be a building block 300 formed by a plurality of units, and the building block 300 formed by the plurality of units is preferred in the present disclosure. The building block 300 is provided with a first protruding column 110', the upper surface of the building block 300 is provided with a second wire embedding groove 320 having the same length as the building block, and a wire harness of a lamp body is placed in the second wire embedding groove 320. Specifically, the first protruding column 110' is provided with two fourth wiring ports 310, the two fourth wiring ports 310 are oppositely arranged on the first protruding column 110', the two fourth wiring ports 310 are both communicated with the second wire embedding groove 320, and when the wire harness of the lamp body is routed to the first protruding column 110', the wire harness needs to be placed in the second wire embedding groove 320 through the two wiring ports of the first protruding column 110'. The bottom of the building block 300 is provided with a fifth splicing groove 340, and the fifth splicing groove 340 is matched with the first protruding column 110', such that a plurality of building blocks 300 can be spliced together; and during assembly of the building blocks, the wire harness can be routed in the building blocks 300, thereby avoiding exposure of the wire harness or disordered placement of the wire harness on the building block, and preventing the wire harness from being damaged and broken due to being pressed by the building block.

In a specific embodiment, the side wall of the building block 300 is provided with a sixth wiring groove 330, the sixth wiring groove 330 is configured to bury the wire harness of the lamp body, and the sixth wiring groove 330 is communicated with the second wiring groove 320. When the plurality of building blocks 300 are spliced together, the wire harness of the lamp body exits from the second wire embedding groove 320 of the building block 300, enters a second wiring groove 320 of another building block 300, and passes through the sixth wiring groove of the building block, such that the wire harness is prevented from exposing on the side wall of the building block 300. Preferably, the bottoms of two side walls of the building block 300 are provided with first recessed portions, the first recessed portions are configured to enable the sixth wiring groove 330 to communicate with the fifth splicing groove 340, and when two building blocks 300 are spliced, the first recessed portions and the sixth wiring groove 330 form a groove body with a larger space for more wire harnesses to be routed in the building blocks 300.

In a specific embodiment, the first protruding column 110' of the building block 300 is provided with a wiring hole 112, the wiring hole 112 is configured to allow the wire harness of the lamp body to be routed, and the wiring hole 112 is communicated with the fifth splicing groove 340. When a plurality of building blocks 300 are spliced together, the wire harness exits from the wiring hole 112 of the building block 300, enters a wiring hole 112 of another building block 300 through the fifth splicing groove 340, then exits from one of the fourth wiring ports 310 of the first protruding column 110', and finally enters the second wire embedding groove 320. During assembly of the building blocks, the wire harness can also be routed in the building blocks 300, thereby avoiding exposure of the wire harness or disordered placement of the wire harness on the building blocks, and preventing the wire harness from being damaged and broken due to being pressed by the building blocks. The first protruding column 110' of the building block 300 is sleeved with a lamp shade 113. Specifically, when the assembly of the building blocks is completed, a lamp body is placed on the building block 300 at the top of a building block model, and under the action of the lamp shade 113, a lighting effect of the building block model can be more realistic, such that the whole building block model is more attractive.

In a specific embodiment, the bottom of the building block 300 is provided with a fourth protruding column 350, the length of the fourth protruding column 350 is less than or equal to the depth of the fifth splicing groove 340, and the bottom of the fourth protruding column 350 is provided with a second wire embedding groove. Specifically, the size of the fourth protruding column 350 is different from that of the first protruding column 110, such that the building block 300 is better matched with the commercially available building block. When the wire harness of the lamp body is routed to the fifth splicing groove 340 of the building block 300, the wire harness passes through the second wire embedding groove of the fourth protruding column 350, and under the action of the second wire embedding groove, the wire harness is not exposed at the bottom of the fourth protruding column 350 and does not affect the assembly of the building blocks 300, thereby ensuring the stability between the building blocks during assembly of the building blocks.

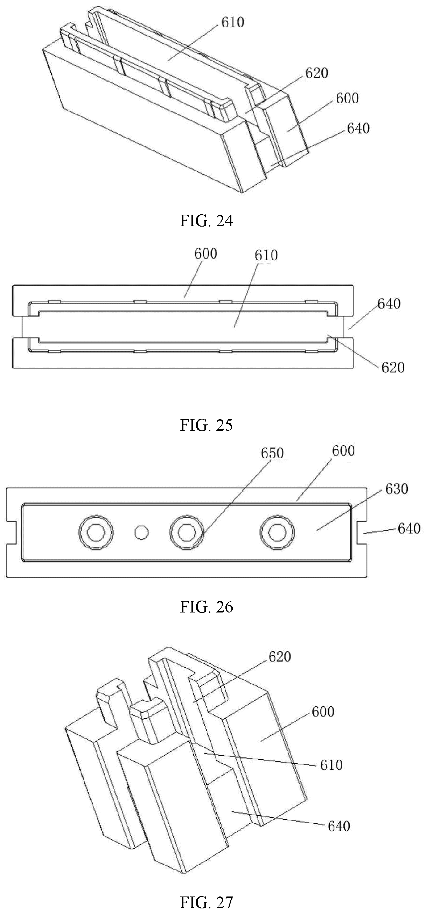

As shown in FIG. 24 to FIG. 30, the present disclosure further provides a building block assembly, which includes a building block 300 and a wire harness accommodating block 600. The wire harness accommodating block 600 may be a wire harness accommodating block 600 matched with the building block 300 formed by one unit, or may be a wire harness accommodating block 600 matched with the building block 300 formed by a plurality of units. A wire harness matched with the building block 300 formed by the plurality of units is preferred in the present disclosure, and the building block 300 is assembled onto the wire harness accommodating block 600. Specifically, the wire harness accommodating block 600 is provided with a slot portion, the building block 300 covers the slot portion of the wire harness accommodating block 600, the wire harness accommodating block 600 is provided with an accommodating groove 610, the accommodating groove 610 has a larger cavity, and the accommodating groove 610 is configured to accommodate a wire harness of a lamp body, such that the wire harness accommodating block 600 may accommodate more harnesses. The side wall of the wire harness accommodating block 600 is provided with a fifth wiring port 620. Specifically, two side walls of the wire harness accommodating block 600 are provided with fifth wiring ports 620, the fifth wiring port 620 is communicated with the accommodating groove 610, and the wire harness of the lamp body can enter the accommodating groove 610 from one fifth wiring port 620, and finally exit from the other fifth wiring port 620. The bottom of the wire harness accommodating block 600 is provided with a sixth splicing groove 630, and the wire harness accommodating block 600 can be spliced with the building block 300. During assembly of the building blocks, the wire harness accommodating block 600 can further prevent the wire harness from being damaged and broken due to being pressed by the building blocks.

In a specific embodiment, the fifth wiring port 620 is communicated with a ninth wiring groove 640, and the ninth wiring groove 640 is configured to bury the wire harness of the lamp body. When the wire harness accommodating block 600 and the building block 300 are spliced together, the wire harness of the lamp body exits from the second wire embedding groove 320 of the building block 300, enters the accommodating groove 610 of the wire harness accommodating block 600, and passes through the ninth wiring groove 640 of the wire harness accommodating block 600, such that the wire harness is prevented from exposing on the side wall of the wire harness accommodating block 600. Preferably, the bottoms of the two side walls of the wire harness accommodating block 600 are provided with second recessed portions, the second recessed portions are configured to enable the ninth wiring groove 640 to communicate with the sixth splicing groove 630, and when the wire harness accommodating block 600 and the building block 300 are spliced together, the second recessed portions and the ninth wiring groove 640 form a groove body with a larger space for more wire harnesses to be routed in the building block 300.

In a specific embodiment, the bottom of the wire harness accommodating block 600 is provided with a fifth protruding column 650, the length of the fifth protruding column 650 is less than or equal to the depth of the sixth splicing groove 630, the bottom of the fifth protruding column 650 is provided with a third wire embedding space, and the building block 300 can be better matched with the commercially available building blocks. When the wire harness of the lamp body is routed to the sixth splicing groove 630 of the wire harness accommodating block 600, the wire harness passes through the third wire embedding space at the bottom of the fifth protruding column 650, and under the action of the third wire embedding space, the wire harness is not exposed at the bottom of the fifth protruding column 650 and does not affect the assembly of the building blocks 300, thereby ensuring the stability between the wire harness accommodating block 600 and the building blocks during assembly of the building blocks.

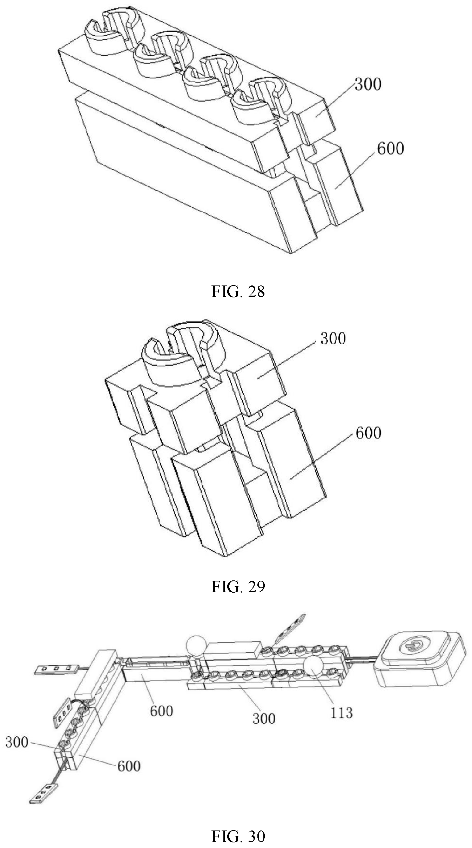

As shown in FIG. 30, the present disclosure further provides a toy. The toy includes a building block 300, which is the building block 300 introduced in the present disclosure, or includes a building block assembly, which is the building block assembly introduced in the present disclosure, and further includes a lamp body. One end of a wire harness of the lamp body is connected to a power supply, the power supply is preferably a battery box, and the wire harness of the lamp body is placed inside the building block 300 or the wire harness accommodating block 600. During assembly of building blocks, the wire harness can be routed in the building block 300 or the building block assembly, thereby avoiding exposure of the wire harness or disordered placement of the wire harness on the building blocks, and preventing the wire harness from being damaged and broken due to being pressed by the building blocks.

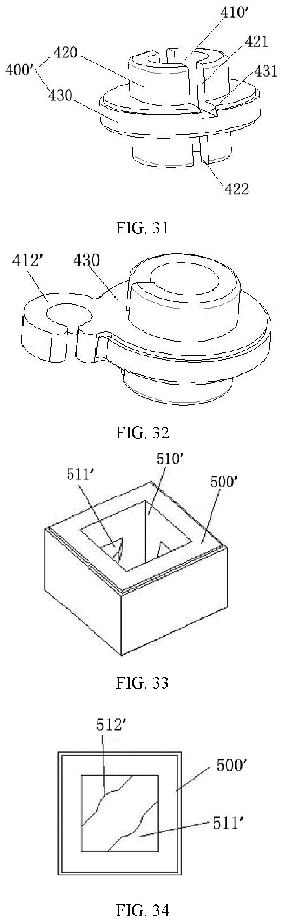

In a fourth aspect, as shown in FIG. 31 to FIG. 34, the present disclosure provides a wire harness deflection block for a building block. The building block may be a commercially available building block, and may also be the building block 100, 100', and 100" introduced in the present disclosure. The building block is provided with a protruding portion and a clamping groove, and the protruding portion is provided with a through hole, and the wire harness deflection block 400' is sleeved on the protruding portion of the building block. The wire harness deflection block 400' includes a wire harness deflection block body 420 and a disk portion 430; the end portion of the wire harness deflection block body 420 is provided with a second wiring hole 410', and the side wall of one end of the wire harness deflection block body 420 is provided with a first wire harness deflection notch 421. Preferably, the wire harness deflection block body 420 and the disk portion 430 are integrally formed; and when the wire harness deflection block 400' and the building block are spliced, the wire harness deflection block body 420 can be directly sleeved on the through hole of the protruding portion, and the disk portion 430 is configured to prevent the entire wire harness deflection block 400' from retracting into the through hole of the protruding portion when assembled building blocks are excessively heavy. Moreover, another assembly method is provided. The wire harness deflection block body 420 is provided with a building block adapter block 500', and is spliced with the protruding portion of the building block through the building block adapter block 500'. Specifically, the top and the bottom of the building block adapter block 500' are provided with third splicing grooves 510', the two third splicing grooves 510' are communicated with each other, a wire harness 800' passes through the clamping groove of the building block, and the third splicing groove 510' is spliced with the protruding portion of the building block, thereby ensuring the stability of the building block adapter block 500' and the building block; the wire harness deflection block 400' is spliced with the third splicing groove 510', the wire harness 800' passes through the second wiring hole 410', and when the wire harness deflection block 400' and the building block are spliced, the second wiring hole 410' is communicated with the through hole of the building block, the wire harness conveniently passes through the second wiring hole 410' and the through hole of the building block, the wire harness 800' exits from a first wire harness deflection notch 421, the wire harness can turn from the axial direction of the second wiring hole 410' to the radial direction of the second wiring hole 410' to pass through the first wire harness deflection notch 421 to achieve deflection of the wire harness 800'; the first wire harness deflection notch 421 may be formed at any position of the side wall of the wire harness deflection block 400', which contributes to adjustment of an exit direction of the wire harness 800'; and the wire harness deflection block 400' may rotate relative to the building block, the shape of the wire harness deflection block 400' is preferably a cylinder, this is conducive to rotation of the wire harness deflection block 400', a rotation angle can be adjusted according to the exit direction of the wire harness, and the rotation angle may be any angle, to achieve angular deflection of the wire harness within a range of 0° to 360°. During assembly of building blocks, the wire harness can be freely routed in all directions inside the building blocks and are not pressed by the building blocks, thereby avoiding exposure of the wire harness or disordered placement of the wire harness on the building blocks, and preventing the wire harness from being damaged and broken due to being pressed by the building blocks.

More specifically, the third splicing groove 510' of the building block adapter block 500' is provided with two limiting plates 511', the two limiting plates 511' are provided with arc portions 512', and the two limiting plates 511' are oppositely arranged in the third splicing groove 510' to form a channel, one end of the wire harness 800' is connected to a power supply, and the other end is connected to a lamp body. The channel is configured to allow the wire harness 800' and the lamp body to pass through, the limiting plates 511' are provided with the arc portions 512', the limiting plates 511 form an arc-shaped bayonet in the third splicing groove 510', the arc-shaped bayonet may be configured to clamp a first protruding column 110 of the building block 100" or the wire harness deflection block 400', the third splicing groove 510' is configured to clamp the first protruding column 110 of the building block 100" or the wire harness deflection block 400', and the wire harness deflection block 400' can rotate in the arc-shaped bayonet and further ensure the stability of the wire harness deflection block 400' and the adapter block 500' or ensure the stability of the adapter block 500' and the building block 100".

In addition, the present disclosure further provides another embodiment. The wire harness deflection block 400' is fixedly connected or integrally formed with one of third splicing grooves 510' of the adapter block 500', the adapter block 500' is still spliced with the building block 100", the wire harness 800' directly enters the second wiring hole 410' of the wire harness deflection block 400' from the third splicing groove 510', and exits from the first wire harness deflection notch 421, and a function of changing a wire harness routing direction can also be achieved. The first wire harness deflection notch 421 may be formed at any position of the wire harness deflection block 400', and this contributes to adjustment of an exit direction of the wire harness 800', and enables the wire harness 800' to be freely routed in all directions inside the building blocks during assembly of the building blocks, thereby avoiding exposure of the wire harness or disordered placement of the wire harness on the building blocks, and preventing the wire harness 800' from being damaged and broken due to being pressed by the building blocks.

In a specific embodiment, as shown in FIG. 31, the upper surface of the disk portion 430 is provided with a tenth wiring groove 431, and the tenth wiring groove 431 is communicated with the first wire harness deflection notch 421. The tenth wiring groove 431 is configured to accommodate the wire harness 800'. When the wire harness 800' is led out from the first wire harness deflection notch 421, the wire harness 800' passes through the tenth wiring groove 431, to further avoid exposure of the wire harness or disordered placement of the wire harness on the building blocks, and prevent the wire harness 800' from being damaged and broken due to being pressed by the building blocks. The disk portion 430 is provided with a wire bundling portion 412', the wire bundling portion 412' is provided with a through hole for accommodating the wire harness 800', the wire bundling portion 412' is provided with a slot allowing the wire harness 800' to enter and can bundle a plurality of wire harnesses 800' together, and a function of avoiding disordered placement of the wire harnesses 800' on the building blocks can also be achieved.

The present disclosure further provides a building block assembly. As shown in FIG. 31, FIG. 32, FIG. 33, FIG. 34, FIG. 35, FIG. 36, FIG. 39, and FIG. 41, the building block assembly includes a wire harness deflection block 400' and further includes a building block 100", the building block 100" is provided with a plurality of first protruding columns 110", the first protruding columns 110" are provided with first wiring holes 111", and the building block 100" is spliced with the wire harness deflection block 400' through the first protruding columns 110". Specifically, the wire harness deflection block 400' can be directly sleeved on the first wiring hole 111" of the first protruding column 110', or spliced through an adapter block 500' of the wire harness deflection block 400', the bottom of the building block 100" is provided with a first splicing groove 120', the first wiring hole 111' is communicated with the first splicing groove 120', the first splicing groove 120' is matched with the first protruding column 110', and the first splicing groove 120' is configured to be spliced with a commercially available building block or another building block 100", to ensure the stability of the building block 100" and the commercially available building block or the stability of the building block 100" and the building block 100". The building block 100" is provided with a first wiring groove 130', the first wiring groove 130' is exposed on the outer surface of the building block 100", the first wiring groove 130' is provided with a wire harness entry slot 131' and a wire harness exit slot 132', the wire harness entry slot 131' and the wire harness exit slot 132' are arranged at the bottom of the building block 100", a wire harness 800' enters the building block 100" through the wire harness entry slot 131', the wire harness 800' is routed in an orientation of the first wiring groove 130', and the wire harness 800' can be routed in the horizontal direction of the building block 100", passes through the wire harness exit slot 132" and the first splicing groove 120' in sequence, enters the first wiring hole 111", and is routed in an axial direction of the first wiring hole 111". During assembly of building blocks, a plurality of wire harness 800' can be freely routed in all directions inside the building blocks and are not pressed by the building blocks, without affecting the overall structural stability of the building blocks.

Specifically, the first wiring groove 130' includes a first groove body 133', a second groove body 134', and a third groove body 135' which are communicated in sequence, the first groove body 133' is positioned on one outer side wall of the building block 100", the second groove body 134' is positioned on the upper end face of the building block 100", the third groove body 135' is positioned on another outer side wall of the building block 100", and the third groove body 135' and the first groove body 133' are arranged opposite to each other. The wire harness 800' can be routed in orientations of the first groove body 133', the second groove body 134', and the third groove body 135'. The bottom of the building block 100" is provided with at least two recessed portions 140', one of the recessed portions 140' is correspondingly arranged at the wire harness entry slot 131' of the first wiring groove 130', the other recessed portion 140' is correspondingly arranged at the wire harness exit slot 132' of the first wiring groove 130', the wire harness entry slot 131' is communicated with the first groove body 133' and the first splicing groove 120' through one first recessed portions 140', and the wire harness exit slot 132' is communicated with the third groove body 135' and the first splicing groove 120' through the other first recessed portions 140', such that the first wiring groove 130' is communicated with the first splicing groove 120'. When two building blocks 100" are spliced together, the wire harness entry slot 131', the first splicing groove 120', and the wire harness exit slot 132' form a groove body with the second groove body 134', and an internal space of the groove body can accommodate a plurality of wire harnesses 800' without affecting the stability of the building blocks. Under matching of the first wiring holes 111" of the plurality of protruding columns 110", the plurality of wire harnesses 800' in the groove body can be routed to different orientations, and the wire harnesses 800' from different orientations can be gathered in the groove body, thereby preventing the wire harnesses from being damaged and broken due to being pressed by the building blocks and enabling the wire harnesses to be more attractive on the building blocks.

In a specific embodiment, the groove width of the first groove body 133' is greater than the groove width of the second groove body 134', the groove width of the third groove body 135' is greater than the groove width of the second groove body 134', and two ends of the second groove body 134' are provided with chamfered structures, to enable the two ends of the second groove body 134' to have flared structures that open outwardly. The flared shape refers to cutting off a right-angle end of the second groove body 134', and after the wire harness 800' is pressed up and down, when the length of the wire harness is required to be adjusted and the wire harness 800' is pulled at a certain segment, the wire harness 800' moves within the flared portion at a gentler angle than a right-angle side. This reduces stress concentration caused by the right-angle side when the wire harness is moved, thereby reducing the risk of scratching or peeling of a paint coating and effectively lowering the likelihood of damage of the wire harness. The inner wall of the first splicing groove 120' is provided with a plurality of guide portions 121', and the guide portions 121' protrude outward from the surface of the inner wall of the first splicing groove 120', wherein the guide portion 121' is a V-shaped structure, and two guide portions 121' are correspondingly arranged on two sides of the first recessed portion 140'. Because the provision of the first splicing groove 120' at the bottom disrupts the structure for engaging with a stud at the bottom in the existing building block design, this V-shaped structure is provided to increase a contact area to ensure tight engaging of the building blocks, and when the wire harness 800' enters the first wiring hole 111" from the wire harness exit slot 132', the guide portions 121' better guide the wire harness 800' to pass through the first wiring hole 111", without damage due to being pressed.

In a specific embodiment, the building block 100" is provided with a plurality of first wiring grooves 130', and the second groove body 134' of the first wiring groove 130' is correspondingly arranged between two adjacent first protruding columns 110". Specifically, the second groove body 134' is vertically arranged between every two first protruding columns 110", and under the action of the plurality of first wiring grooves 130', the wire harness is more conveniently routed in the horizontal direction of the building block 100".

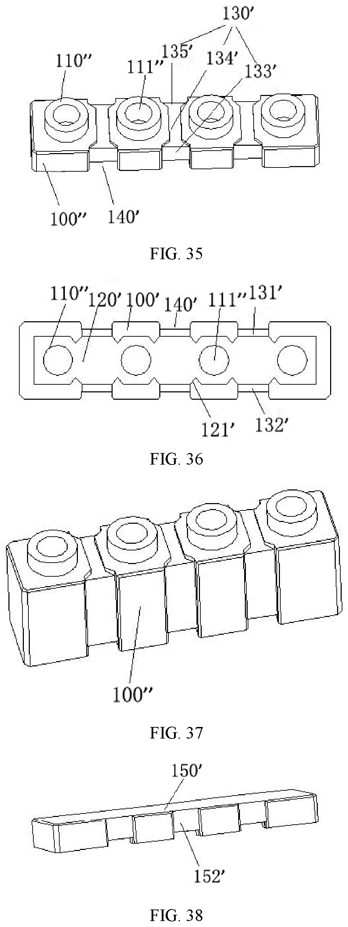

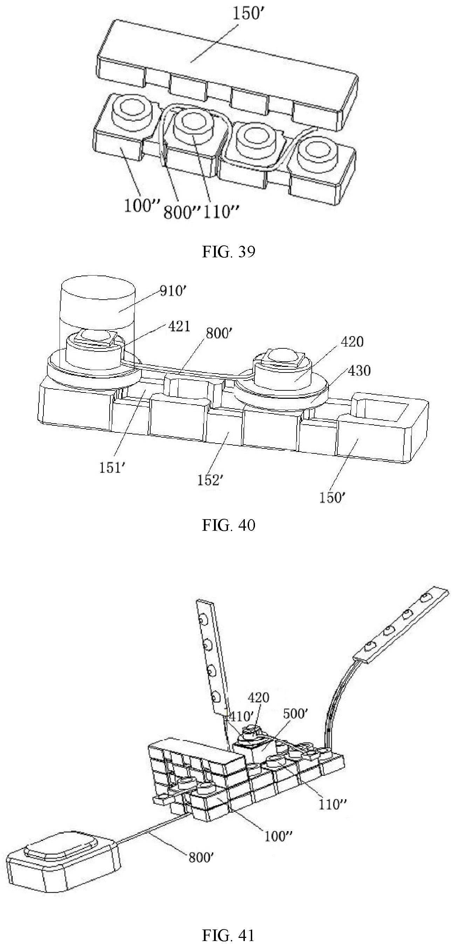

In a specific embodiment, as shown in FIG. 38 and FIG. 40, the building block assembly further includes a building block cover plate 150', the building block cover plate 150' is provided with a fourth splicing groove 151', the side wall of the building block cover plate 150' is provided with a seventh wiring groove 152', the fourth splicing groove 151' and the first protruding column 110" are spliced, and when a lamp body needs to be placed on an assembled building block model, the building block cover plate 150' is used at the last step before completing the assembly of the building block model, and is spliced through the fourth splicing groove 151', to ensure the stability of the building block cover plate 150' on the building block model; and the wire harness 800' passes through the seventh wiring groove 152', to avoid direct exposure on the building block, and the lamp body is placed on the upper surface of the wire harness deflection block.

In addition, as shown in FIG. 31, FIG. 32, and FIG. 40, the building block cover plate 150' can also be directly used in conjunction with the wire harness deflection block 400'. Specifically, the wire harness deflection block 400' is spliced with the fourth splicing groove 151' of the building block cover plate 150', and the side wall of the other end of the wire harness deflection block body 420 is provided with a second wire harness deflection notch 422; the wire harness 800' enters the fourth splicing groove 151' through the seventh wiring groove 152' to avoid direct exposure on the building block; the wire harness 800' enters the second wiring hole 410' through the second wire harness deflection notch 422 of the wire harness deflection block 400', exits from the first wire harness deflection notch 421 of the wire harness deflection block 400', and then is led out; and at this moment, the wire harness 800' may act on another wire harness deflection block 400' spliced on the building block cover plate 150', such that the wire harness 800' can be routed in an orientation of the building block cover plate 150'. Both the second wire harness deflection notch 422 and the first wire harness deflection notch 421 are wire harness deflection notches.

In a specific embodiment, as shown in FIG. 40, the wire harness deflection block 400' is sleeved with a transparent lamp shade 910', and under the action of the transparent lamp shade 910', a lighting effect of the building block model can be more realistic, thereby allowing the building block model as a whole to be more attractive. In addition, as shown in FIG. 35 and FIG. 37, the present disclosure further provides building blocks 100" with different heights, an adapter block 500', a wire harness deflection block 400', and a building block cover plate 150'.

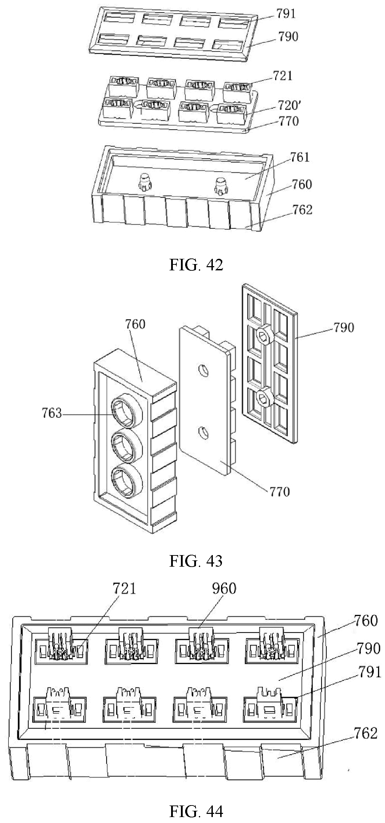

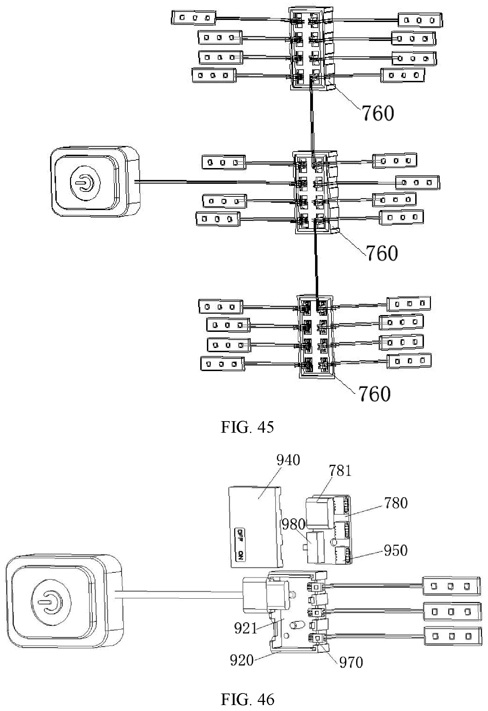

In a fifth aspect, as shown in FIG. 42 to FIG. 45, the present disclosure provides an expander, which includes an expander housing 760, a second circuit board 770, and a first cover plate 790. The expander housing 760 is provided with a seventh groove body 761, a first fixing column is arranged in the seventh groove body 761, a number of first fixing columns is preferably two, and the second circuit board 770 is arranged in the seventh groove body 761 of the expander housing 760. Specifically, the second circuit board 770 is provided with a through hole matched with the first fixing column; when the second circuit board 770 is placed in the seventh groove body 761 of the expander housing 760, the first fixing column passes through the through hole of the second circuit board 770; a plurality of first female connectors 720' for power input or output are connected to the second circuit board 770; a battery box is electrically connected to one of the first female connectors 720'; under the combined action of the battery box and the second circuit board 770, the remaining first female connectors 720' are powered on, a lamp body can be electrically connected to each of the first female connectors 720' through an electric wire, and a specific connecting manner is soldering; and under the action of the expander, one battery box can provide power for a plurality of lamp bodies, thereby avoiding a problem that each lamp body needs to be equipped with a battery box, and reducing a number of battery boxes used at the same time during assembly of the building blocks. The first cover plate 790 covers the seventh groove body 761 of the expander housing 760, and the seventh groove body 761 of the expander housing 760 is provided with a slot for accommodating the first cover plate 790; the first cover plate 790 is provided with a first fixing hole matched with the first fixing column, and a number of fixing holes is also preferably two; the first cover plate 790 is provided with through holes matched with the first female connectors 720'; and when the first cover plate 790 covers the expander housing 760, the first fixing column is inserted into the first fixing hole, the first female connectors 720' can be exposed from the through holes 791 of the first cover plate 790, and the overall stability of the expander is ensured.

In a specific embodiment, the first female connector 720' is provided with a first mating port 721, the first mating port is provided with a first guide structure and a first metal conductive plate, the first metal conductive plate is configured to conduct current, a second male connector 960 is inserted into the first mating port 721 of the first female connector 720', the second male connector 960 is provided with a first mating plug, the first mating plug is provided with a first limiting structure matched with the first guide structure, one end of the first mating plug is electrically inserted into the first mating port 721, and is in contact with the first metal conductive plate, the other end of the first mating plug is connected to an electric wire of the lamp body, and under the interaction of the first guide structure and the first limiting structure, the first female connector 720' is connected with the second male connector 960, to ensure the stability of electric connection therebetween and ensure that the first female connector is not easily disconnected from the second male connector.

In a specific embodiment, the bottom of the expander housing is provided with a sixth protruding column 763, the sixth protruding column 763 is matched with commercially available building blocks, and the expander housing preferably has the same shape and size as the building blocks, such that the expander is spliced on the building blocks and integrated with the building blocks, and a product is harmonious and more attractive. The side wall of the expander housing is provided with an eleventh wiring groove 762, and during assembly of the building blocks, the electric wire of the lamp body is placed in the eleventh wiring groove 762, to avoid pressing the electric wire between the building blocks, thereby ensuring the stability between the building blocks.

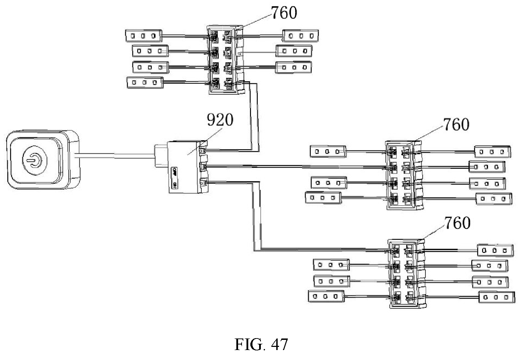

As shown in FIG. 42 to FIG. 47, the present disclosure further provides an expander assembly. The expander assembly includes an expander, and further includes a TEPY-C expander. The TEPY-C expander includes a TEPY-C expander housing 920, a third circuit board 780, and a second cover plate 940; the TEPY-C expander housing 920 is provided with an eighth groove body 921; and the third circuit board 780 is arranged in the eighth groove body 921. Specifically, the third circuit board 780 is provided with a through hole matched with a second fixing column, and when the third circuit board 780 is placed in the eighth groove body 921 of the TEPY-C expander housing 920, the second fixing column passes through the through hole of the third circuit board 780. The third circuit board 780 is connected with a TEPY-C interface 781 for power input, a battery box is electrically connected to the TEPY-C expander through a TEPY-C data cable, a plurality of second female connectors 950 are connected to the third circuit board 780, and under the combined action of the battery box and the third circuit board 780, the second female connectors 950 are powered on, the second female connectors 950 are connected to the first female connectors 720' of the expander, the expander can be electrically connected to the second female connector 950 through an electric wire, and a specific connecting manner is soldering. Under the action of the TEPY-C expander, one battery box can provide power for a plurality of lamp bodies, thereby further avoiding a problem that each lamp body needs to be equipped with one battery box, and reducing a number of battery boxes used at the same time during assembly of the building blocks. The second cover plate 940 covers the eighth groove body 921 of the TEPY-C expander housing 920, the second cover plate 940 is configured to fix the third circuit board 780, the eighth groove body 921 of the TEPY-C expander housing 920 is provided with a slot for accommodating the second cover plate 940, the second cover plate 940 is provided with a second fixing hole matched with the second fixing column, a number of second fixing holes is also preferably two, and when the second cover plate 940 covers the TEPY-C expander housing 920, the second fixing column is inserted into the second fixing hole, thereby ensuring the overall stability of the expander. In addition, the second female connector 950 may also be directly connected to the electric wire of the lamp body.

In a specific embodiment, the second female connector 950 is provided with a second mating port, the second mating port is provided with a second guide structure and a second metal conductive plate, the second metal conductive plate is configured to conduct current, a second male connector 970 is inserted into the second mating port of the second female connector 950, the second male connector 970 is provided with a second mating plug, the second mating plug is provided with a second limiting structure matched with the second guide structure, one end of the second mating plug is electrically inserted into the second mating port and is in contact with the second metal conductive plate, and the other end of the second mating plug is connected to an electric wire of the expander. Under the interaction of the second guide structure and the second limiting structure, the second female connector 950 is connected with the second male connector 970, to ensure the stability of electric connection therebetween and ensure that the second female connector is not easily disconnected from the second male connector.

In a specific embodiment, the third circuit board 780 is also connected with a power switch 980, and the TEPY-C expander housing 920 is matched with the cover plate to form an opening for exposing the power switch 980. Through the power switch 980, a user can conveniently and quickly control the TEPY-C expander. Specifically, the opening is reduced from the outside to the inside, so that the opening has a flared structure that opens outwardly, and the flared opening provides convenience for the user to toggle the power switch 980. The bottom of the TEPY-C expander housing 920 is provided with a protruding column, and the protruding column is matched with commercially available building blocks. The TEPY-C expander housing preferably has the same shape and size as the building blocks, so that the TEPY-C expander is spliced on the building blocks and integrated with the building blocks, and a product is harmonious and more attractive.

It should be understood that various forms of procedures shown above may be adapted by reordering, adding, or removing steps. For example, the steps described in the present disclosure may be executed in parallel, sequentially, or in different orders as long as they can be accomplished.

The above-described embodiments are merely preferred embodiments of the present disclosure, and are not limitations to the present disclosure in any form, any alterations, equivalent changes, and modifications made to the above-described embodiments in accordance with the technical essence of the present disclosure without departing from the contents of the present disclosure still fall within the scope of the technical solutions of the present disclosure.

## Claims

1. A building block, **characterized by** comprising a wiring groove, wherein the wiring groove is exposed on an outer surface of the building block.

2. The building block according to claim 1, **characterized in that** the building block is provided with a plurality of first protruding columns, the first protruding column is provided with a first wiring hole, the bottom of the building block is provided with a first splicing groove, and the first wiring hole is communicated with the first splicing groove.

3. The building block according to any of the preceding claims, **characterized in that** the wiring groove comprises a first wiring groove, the first wiring groove is provided with a wire harness entry slot and a wire harness exit slot, the wire harness entry slot and the wire harness exit slot are arranged at the bottom of the building block, the bottom of the building block is provided with at least two first recessed portions, one of the first recessed portions is correspondingly arranged at the wire harness entry slot of the first wiring groove, and the other one of the first recessed portions is correspondingly arranged at the wire harness exit slot of the first wiring groove, wherein the first recessed portions are configured to allow the first wiring groove to communicate with the first splicing groove.

4. The building block according to any of the preceding claims, **characterized in that** the first wiring groove comprises a first groove body, a second groove body, and a third groove body which are communicated in sequence, the first groove body is positioned on one outer side wall of the building block, the second groove body is positioned on an upper surface of the building block, the third groove body is positioned on another outer side wall of the building block, and the third groove body and the first groove body are arranged opposite to each other.

5. The building block according to any of the preceding claims, **characterized in that** the building block is provided with a plurality of first wiring grooves, and the second groove body of the first wiring groove is correspondingly arranged between two adjacent first protruding columns.

6. The building block according to any of the preceding claims, **characterized by** comprising a building block main body and a building block cover body assembled on the building block main body, the building block main body is provided with a first accommodating groove configured to accommodate a wire harness of a lamp body, a front wall of the building block main body is provided with a plurality of first wiring ports extending therethrough, a rear wall of the building block main body is provided with a second wiring port extending therethrough, a left wall and a right wall of the building block main body are provided with third wiring ports extending therethrough, and the wiring groove is formed onto the building block main body.

7. The building block according to any of the preceding claims, **characterized in that** the wiring groove comprises a second wiring groove and a third wiring groove, the first wiring port and the second wiring port are both communicated with the second wiring groove, and the third wiring port is communicated with the third wiring groove.

8. The building block according to any of the preceding claims, **characterized in that** the bottom of the building block is provided with a second splicing groove, and the building block is assembled with a block or another building block through the second splicing groove.

9. The building block according to any of the preceding claims, **characterized in that** the building block main body is provided with a slot portion, the building block cover body covers the slot portion of the building block main body, and the building block cover body is provided with a second protruding column matched with the second splicing groove of the building block main body.

10. The building block according to any of the preceding claims, **characterized in that** the bottom of the building block main body is provided with a third protruding column, a length of the third protruding column is less than or equal to a depth of the second splicing groove, and the bottom of the third protruding column is provided with a plurality of first wire embedding spaces.

11. The building block according to any of the preceding claims, **characterized in that** the wiring groove comprises a fourth wiring groove, the fourth wiring groove is formed on the building block cover body, and the fourth wiring groove is exposed on an outer surface of the building block cover body, wherein the fourth wiring groove comprises a fourth groove body, a fifth groove body, and a sixth groove body which are communicated in sequence, the fourth groove body is positioned on one outer side wall of the building block cover body, the fifth groove body is positioned on the upper surface of the building block cover body, the sixth groove body is positioned on another outer side wall of the building block cover body, and the sixth groove body and the fourth groove body are arranged opposite to each other.

12. The building block according to any of the preceding claims, **characterized in that** the wiring groove comprises fifth wiring grooves, and the left side wall and the right side wall of the building block cover body are provided with the fifth wiring grooves.

13. The building block according to any of the preceding claims, **characterized in that** the first protruding column is provided with two fourth wiring ports, and the two fourth wiring ports are oppositely arranged in the first protruding column; and the upper surface of the building block is provided with a second wire embedding groove having the same length as the building block, the second wire embedding groove penetrates through the first protruding column, and the two fourth wiring ports are communicated with the second wire embedding groove.

14. The building block according to any of the preceding claims, **characterized in that** the wiring groove comprises a sixth wiring groove, the side wall of the building block is provided with the sixth wiring groove, and the sixth wiring groove is communicated with the second wire embedding groove.

15. A building block assembly, **characterized by** comprising the building block according to any of the preceding claims.

16. The building block assembly according to any of the preceding claims, **characterized by** comprising a wire harness deflection block, wherein the wire harness deflection block is connectable to the building block; the wire harness deflection block is provided with a second wiring hole, and when the wire harness deflection block and the building block are assembled, the second wiring hole is communicated with the first wiring hole, to allow the wire harness to pass through the second wiring hole and the first wiring hole; and the side wall of the second wiring hole is provided with a wire harness deflection notch, the wire harness turns from an axial direction of the second wiring hole to a radial direction of the second wiring hole to pass through the wire harness deflection notch to achieve deflection of the wire harness, and the wire harness deflection block is capable of rotating relative to the building block to achieve angular deflection of the wire harness within a range of 0° to 360°.

17. The building block assembly according to any of the preceding claims, **characterized by** further comprising a building block adapter block, wherein the building block adapter block is provided with a third splicing groove, and the wire harness deflection block is connected to the building block through the building block adapter block, wherein a limiting boss is arranged in the third splicing groove of the building block adapter block, and the limiting boss is provided with an arc portion.

18. The building block assembly any of the preceding claims, **characterized by** comprising a wire harness accommodating block, wherein the building block is assembled onto the wire harness accommodating block, the wire harness accommodating block is provided with a second accommodating groove, the second accommodating groove is configured to accommodate a wire harness of a lamp body, a side wall of the wire harness accommodating block is provided with a fifth wiring port, the fifth wiring port is communicated with the second accommodating groove, and the bottom of the wire harness accommodating block is provided with a sixth splicing groove.

19. A building block expander, **characterized by** comprising the building block according to any of the preceding claims, and further comprising a first circuit board, wherein the first circuit board is arranged in the accommodating groove of the building block main body; a plurality of first female connectors are connected to the first circuit board; the first female connector is exposed on the building block through the first wiring port or the third wiring port; and the first female connector is configured to connect a lamp body.

20. A toy, **characterized by** comprising the building block according to any of the preceding claims, or the building block assembly according to any of the preceding claims, or the building block expander according to any of the preceding claims, and further comprising a lamp body, wherein one end of a wire harness of the lamp body is connected to a power supply.
